# EUROPÄISCHE PATENTANMELDUNG

(11) **EP 3 085 479 A1**
(43) Veröffentlichungstag der Anmeldung: **26.10.2016**
(21) Anmeldenummer: 16158976.7
(22) Anmeldetag: 07.03.2016
(51) Int. Cl.: B23B 31/107, B23B 31/20, B25F 3/00, B23Q 3/12

(54) **PRÄZISIONSSPANNSYSTEM**

(30) Priorität: 22.04.2015 DE 102015106162
(71) Anmelder: Röhm GmbH, 89567 Sontheim (DE)
(72) Erfinder: Schenk, Peter, 89168 Niederstotzingen (DE)
(74) Vertreter: Hentrich Patentanwälte PartG mbB

(57) **Zusammenfassung**

Die Erfindung betrifft ein Präzisionsspannsystem (1) mit einer eine Werkzeugaufnahme (2) aufweisenden Spannzange (3) und mit einem einteilig gebildeten Futterkörper (4), an dessen erstes Ende (5) ein Anschlussstücks (6) ausgeformt ist, welches unmittelbar an eine Maschinenspindel (7) einer Bohrmaschine anschließbar ist, und an dessen dem ersten Ende (5) abgewandtes zweites Ende (8) eine Zangenaufnahme (9) zur Aufnahme der Spannzange (3) ausgeformt ist. Das Anschlussstück (6) ist derart ausgestaltet, eine formschlüssige Verbindung mit der Maschinenspindel (7) auszubilden zur positiven Drehmitnahme des Futterkörpers (4), die Zangenaufnahme (9) ist konusförmig gebildet, und der Spannzange (3) ist ein Spannzangengewinde (10) zugeordnet, welches mit einem am zweiten Ende (8) des Futterkörpers (4) ausgebildeten Gewinde (11) verschraubbar ist. Ferner betrifft die Erfindung eine Kombination einer Bohrmaschine mit einem Präzisionsspannsystem (1), sowie ein System aus einem Präzisionsspannsystem (1) mit mehreren Spannzangen (3).

## Beschreibung

Die Erfindung betrifft ein Präzisionsspannsystem mit einer eine Werkzeugaufnahme aufweisenden Spannzange und mit einem einteilig gebildeten Futterkörper, an dessen erstes Ende ein Anschlussstück ausgeformt ist, welches unmittelbar an eine Maschinenspindel einer Bohrmaschine anschließbar ist, und an dessen dem ersten Ende abgewandtes zweites Ende eine Zangenaufnahme zur Aufnahme der Spannzange ausgeformt ist. Desweiteren betrifft die Erfindung eine Kombination einer Bohrmaschine mit einem Präzisionsspannsystem und ein System umfassend ein Präzisionsspannsystem.

Ein als Schnellwechselfutter gebildetes Spannsystem der eingangs genannten Art ist in der DE 1 735 423 U beschrieben, welches einen Werkzeugträger mit einer Spannzange vorsieht zur Sicherung gegen das Herausrutschen des eingespannten Werkzeuges. Dabei wird der Futterkörper auf eine konusförmige Maschinenspindel reibschlüssig aufgesteckt, wozu im Futterkörper auf der der Maschinenspindel zugewandten Seite eine Konusaufnahme ausgebildet ist. Die Drehbewegung des Futterkörpers wird auf der der Maschinenspindel abgewandten Seite mittels Mitnehmerkugeln auf einen Werkzeugträger übertragen, der wiederum das einzuspannende Werkzeug drehfest aufnehmen kann. Bei diesem Spannsystem ist die Anzahl der Schnittstellen gegenüber anderen aus dem Stand der Technik bekannten Spannsystemen oder Bohrfuttern drastisch reduziert, so dass dieses eine höhere Rundlaufgenauigkeit für das einzuspannende Werkzeug bereitstellt. Aufgrund der Drehübertragung der Kugeln sowie des einzuspannenden Werkzeugs ergeben sich jedoch noch immer Ungenauigkeiten hinsichtlich des Rundlaufes des in der Werkzeugaufnahme aufgenommenen Werkzeugs.

Es ist daher die Aufgabe der vorliegenden Erfindung ein Präzisionsspannsystem derart weiterzubilden, dass die Umdrehung der Maschinenspindel möglichst unmittelbar auf das Werkzeug übertragen wird. Ferner ist es Aufgabe der vorliegenden Erfindung eine Kombination einer Bohrmaschine mit einem Präzisionsspannsystem, sowie ein System umfassend ein Präzisionsspannsystem bereitzustellen, durch die Ungenauigkeiten des Rundlaufs weitestgehend ausgeräumt werden.

Die das Präzisionsspannsystems betreffende Aufgabe wird bei einem Präzisionsspannsystem der eingangs genannten Art dadurch gelöst, dass das Anschlussstück derart ausgestaltet ist, eine formschlüssige Verbindung mit der Maschinenspindel auszubilden zur positiven Drehmitnahme des Futterkörpers, dass die Zangenaufnahme konusförmig gebildet ist, und dass der Spannzange ein Spannzangengewinde zugeordnet ist, welches mit einem am zweiten Ende des Futterkörpers ausgebildeten Gewinde verschraubbar ist.

Damit ist der Vorteil verbunden, dass in der Spannzangenaufnahme verschiedene Spannzangen aufgenommen werden können, die hinsichtlich des Durchmessers ihrer Werkzeugaufnahme variieren, um unterschiedlich große Werkzeuge, d.h. Bohrer, Schrauber, etc. aufzunehmen. Gleichzeitig kann dadurch eine Rundlaufgenauigkeit des eingespannten Werkzeugs von 0,07 mm und geringer erreicht werden. Das erfindungsgemäße Präzisionsspannfutter ist dabei frei von - üblicherweise vorgesehenen - Spannbacken, einem Gewindering oder einer mit dem Gewindering drehfest gekoppelten Spannhülse gebildet. Darüber hinaus ist der Futterkörper unmittelbar an die Maschinenspindel anschließbar und einteilig geformt derart, dass seine Drehbewegung ebenfalls unmittelbar auf die in der Spannzangenaufnahme angeordnete Spannzange übertragen wird, in die das Werkzeug eingespannt werden kann. Durch die konusförmige Zangenaufnahme ist gewährleistet, dass eine einen Kegel aufweisende Spannzange radial allseitig an der Spannzangenaufnahme anliegt und beim Verschrauben des Gewindes mit dem Spannzangengewinde ein Niederzug der Spannzange und ein Klemmen des Werkzeugschaftes erfolgt. Ferner ist gewährleistet, dass das Anschlussstück eine formschlüssige, vorzugsweise eine Passung ausbildende Verbindung mit der Maschinenspindel bereitstellt. Hierdurch ist eine spielreduzierte bzw. spielfreie Koppelung des Futterkörpers an die Maschinenspindel realisiert. Anders als es aus der oben genannten DE 1 735 423 U bekannt ist, ist also bei der Erfindung auf ihrer der Maschinenspindel zugewandten Seite gerade kein Konus vorgesehen, der beim Aufstecken des Spannfutters auf die Maschinenspindel zu einer dezentralen Ausrichtung des Futterkörpers führen kann.

Es hat sich als sinnvoll erwiesen, wenn das Gewinde radial innen liegend an der Zangenaufnahme ausgebildet ist, und wenn das Spannzangengewinde am Außenumfang der Spannzange ausgebildet ist. Damit ist der Vorteil verbunden, dass das zweite Ende des Futterkörpers durch die Spannzange nicht überragt wird und daher das zweite Ende des Futterkörpers entsprechend schmal geformt werden kann. Wird das Spannzangengewinde ist das Gewinde der Zangenaufnahme eingedreht, so führt dies zu einem Niederzug der Spannzange in die Zangenaufnahme.

Des Weiteren hat es sich in diesem Zusammenhang als vorteilhaft erwiesen, wenn an der Spannzange ein Spannbund ausgebildet ist zur Aufnahme eines Spannwerkzeugs. Dadurch kann die betreffende Spannzange in die Zangenaufnahme mit größerer Hebelkraft eingeschraubt werden, so dass die Drehbewegung der Maschinenspindel noch unmittelbarer auf das Bohrwerkzeug übertragen werden und dadurch eine noch höhere Rundlaufgenauigkeit bereitgestellt ist.

Eine andere bevorzugte Ausführungsform ist dadurch gekennzeichnet, dass das Gewinde radial außen liegend an der Zangenaufnahme ausgebildet ist, und dass das radial innen liegende Spannzangengewinde an einer der Spannzange zugeordneten Überwurfmutter ausgebildet ist. Durch den Einsatz einer Überwurfmutter an der Spannzange lässt sich das Präzisionsspannsystem in seiner axialen Richtung kürzer ausbilden gegenüber der vorstehend genannten Variante mit einer Spannzange mit Außengewinde. Eine weitere Ausführungsform sieht vor, dass ein- und dieselbe Überwurfmutter bei verschiedenen Spannzangen mit unterschiedlichen Werkzeugaufnahme-Durchmessern Verwendung findet.

Um ein möglichst spielfreies Übertragen der Drehbewegung der Maschinenspindel auf das eingespannte Werkzeug zu ermöglichen, hat es sich weiterhin als sinnvoll erwiesen, wenn an der Überwurfmutter Spannstrukturen ausgebildet sind zur Aufnahme eines Spannwerkzeugs. Auch so kann mit mit größeren Hebelkräften das Spannzangengewinde der der Spannzange zugeordneten Überwurfmutter in das Gewinde des zweiten Endes des Futterkörpers eingeschraubt werden.

In einer weiteren bevorzugten Ausführungsform ist vorgesehen, dass im Anschlussstück ein Mitnahmestift unrunden Querschnitts vorgesehen ist. Dieser kann entweder einteilig mit dem Futterkörper geformt oder in eine Tasche im Futterkörper spielfrei eingebracht sein. Der Mitnahmestift ist vorzugsweise als ein Mehrkant, insbesondere als ein Sechskant gebildet.

Zur Ausbildung einer noch drehfesteren Verbindung mit der Maschinenspindel hat es sich gemäß einer weiteren bevorzugten Ausführungsform als vorteilhaft erwiesen, wenn in dem Anschlussstück über den Umfang verteilte Sperrglieder angeordnet sind.

Um diese Sperrglieder vordefiniert ein- bzw. ausrücken zu lassen hat es sich als vorteilhaft gezeigt, wenn am ersten Ende des Futterkörpers ein, vorzugsweise manuell, betätigbarer Sperrring angeordnet ist, durch den die Sperrglieder zwischen einer eingerückten die Maschinenspindel sperrenden Position und einer ausgerückten, die Maschinenspindel freigebenden Position verstellbar sind.

Die die Kombination einer Bohrmaschine und eines Präzisionsspannsystems betreffende Aufgabe wird durch den Merkmalsbestand gemäß Anspruch 9 gelöst. Vorzugsweise ist dabei die Bohrmaschine als ein Druckluftschrauber gebildet.

Eine bevorzugte Ausführungsform einer Kombination zeichnet sich dadurch aus, dass in dem Anschlussstück des Futterkörpers über den Umfang verteilte Sperrglieder angeordnet sind, dass am ersten Ende des Futterkörpers ein betätigbarer Sperrring angeordnet ist, durch den die Sperrglieder zwischen einer eingerückten, die Maschinenspindel sperrenden Position und einer ausgerückten, die Maschinenspindel freigebenden Position verstellbar sind, und dass die Maschinenspindel mindestens eine Sperrgliedaufnahme aufweist zur Aufnahme mindestens eines der im Anschlussstück angeordneten Sperrglieder. Damit ist der Vorteil verbunden, dass in der Maschinenspindel Sperrgliedaufnahmen ausgebildet sind, in die die dem Futterkörper zugeordneten Sperrglieder ein- bzw. ausrücken können, um so eine möglichst spielfreie und formschlüssige Verbindung zwischen der Maschinenspindel und dem Anschlussstück des Präzisionsspannsystems auszubilden. Die Sperrglieder sind dabei also die den Formschluss, bzw. die positive Drehmitnahme bildenden Elemente zwischen dem Präzisionsspannsystem und der Maschinenspindel der Bohrmaschine.

Eine andere bevorzugte Ausführungsform einer Kombination zeichnet sich dadurch aus, dass in dem Anschlussstück des Futterkörpers sowohl ein Mitnahmestift unrunden Querschnitts vorgesehen ist als auch über den Umfang verteilte Sperrglieder angeordnet sind, dass am ersten Ende des Futterkörpers ein betätigbarer Sperrring angeordnet ist, durch den die Sperrglieder zwischen einer eingerückten, die Maschinenspindel sperrenden Position und einer ausgerückten, die Maschinenspindel freigebenden Position verstellbar sind, und dass die Maschinenspindel sowohl mindestens eine eine Steuerkurve aufweisende Sperrgliedaufnahme als auch eine stirnseitig angeordnete Stiftaufnahme unrunden Querschnitts umfasst. Durch eine derartige Steuerkurve lässt sich erreichen, dass das Anschlussstück durch die Sperrglieder in eine vordefinierte Position bezogen wird, mit anderen Worten also ein Niederzug, vorzugsweise ein Planniederzug an die Maschinenspindel erfolgt. In diesem Fall erfüllen also die betreffenden Sperrglieder zusätzlich die Funktion eines mit der Steuerkurve wechselwirkenden Steuerglieds. Die positive Drehmitnahme des Futterkörpers durch die Maschinenspindel erfolgt, vorzugsweise spielfrei, durch den Eingriff des Mitnahmestifts in die Stiftaufnahme der Maschinenspindel. Hierzu weist der Mitnahmestift vorzugsweise einen zum Querschnitt der Stiftaufnahme korrespondierenden Querschnitt auf.

Die das System betreffende Aufgabe wird durch den Merkmalsbestand gemäß Anspruch 12 gelöst. Mit diesem System ist der Vorteil verbunden, dass verschiedene Werkzeuge, wie Bohrwerkzeuge, Bit, Schrauber, etc. in die Spannzangen mit Werkzeugaufnahmen unterschiedlichen Durchmessers eingesetzt werden können. Dadurch ist das System vielseitig und multifunktional einsetzbar. Die Spannzangen sind dabei austauschbar in die Zangenaufnahmen einsetzbar.

Im folgenden wird die Erfindung an in der Zeichnung dargestellten Ausführungsbeispielen näher erläutert; es zeigen:
- Fig. 1: eine erste Ausführungsform eines Präzisionsspannsystems,
- Fig. 2: die Spannzange des Präzisionsspannsystem gemäß Figur 1,
- Fig. 3: eine zweite Ausführungsform eines Präzisionsspannsystems,
- Fig. 4: die Spannzange des Präzisionsspannsystems nach Figur 3 ohne eine Überwurfmutter,
- Fig. 5: einen Ausschnitt einer Maschinenspindel einer Bohrmaschine zum Einsatz bei einem der Präzisionsspannsystem nach Figuren 1 oder 3,
- Fig. 6: eine dritte Ausführungsform eines Präzisionsspannsystems, und
- Fig. 7: einen Ausschnitt einer Maschinenspindel einer Bohrmaschine zum Einsatz bei einem der Präzisionsspannsystem nach Figur 6.

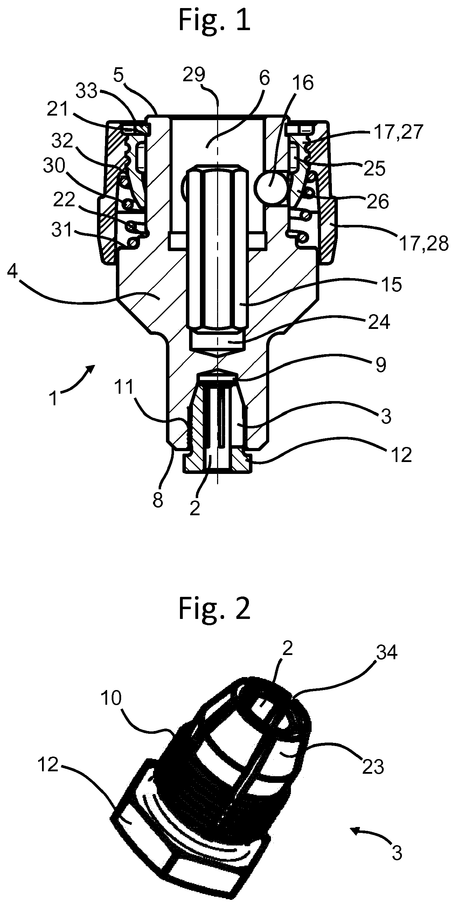

In den Figuren 1, 3 und 6 ist ein Präzisionsspannsystem 1 mit einem einteilig gebildeten Futterkörper 4 gezeigt. An einem ersten Ende 5 des Futterkörpers 4 ist ein Anschlussstück 6 ausgeformt, welches unmittelbar an eine Maschinenspindel 7 einer Bohrmaschine anschließbar ist. An dem dem ersten Ende 5 abgewandten zweiten Ende 8 ist eine Zangenaufnahme 9 zur Aufnahme einer eine Werkzeugaufnahme 2 aufweisenden Spannzange 3 ausgeformt. Das Anschlussstück 6 ist zur positiven Drehmitnahme des Futterkörpers 4 durch die Maschinenspindel 7 derart ausgestaltet, dass das Anschlussstück 6 eine formschlüssige Verbindung mit der Maschinenspindel 7 ausbildet. Die Zangenaufnahme 9 des Futterkörpers 4 ist konusförmig gebildet und das zweite Ende 8 des Futterkörpers 4 weist ein Gewinde 11 auf, das mit einem Spannzangengewinde 10 einer Spannzange 3 verschraubt werden kann.

In dem Ausführungsbeispiel nach Figur 1 ist das Gewinde 11 radial innenliegend an der Zangenaufnahme 9 ausgebildet. In dieses Gewinde 11 ist eine Spannzange 3, insbesondere eine Spannzange 3 gemäß Figur 2 eingesetzt. Diese Spannzange 3 weist einen Spannkegel 23, sowie ein radial außenliegendes Spannzangengewinde 10 auf. Das Spannzangengewinde 10 ist in das Innengewinde der Zangenaufnahme 9 des Futterkörpers 4 eindrehbar. Dazu weist die Spannzange 3 einen Spannbund 12 auf, der als Schlüsselaufnahme für einen (Mehrkant-)Schlüssel dient, vorzugsweise für einen Sechskantschlüssel. Desweiteren besitzt die Spannzange 3 eine Werkzeugaufnahme 1, in die ein Werkzeug einsetzbar ist. Wird die Spannzange 3 in die Zangenaufnahme 9 des Futterkörpers 4 eingeschraubt, so wird der - mit in Längsrichtung orientierten Schlitzen 34 ausgeführte - Kegel 23 durch die Konusform der Zangenaufnahme in Richtung der zentralen Längsachse 29 gedrückt, wodurch das aufgenommene Werkzeug innerhalb der Spannzange 3 geklemmt wird. Das Spannzangengewinde 10 und das Gewinde 11 halten somit einen Niederzug für die Spannzange 3 in die Zangenaufnahme 9 bereit.

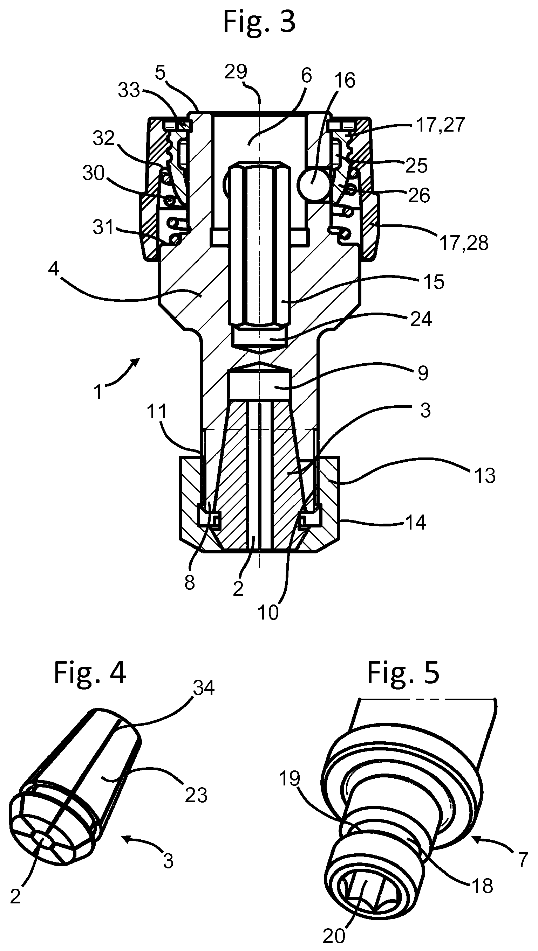

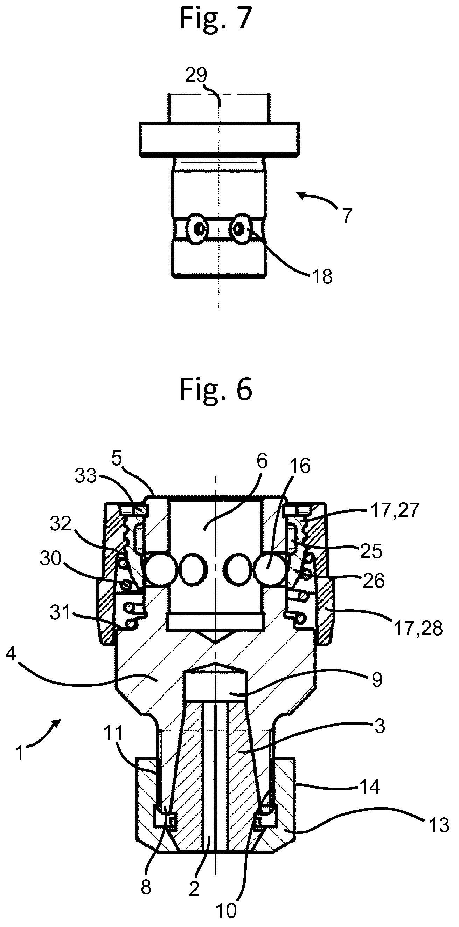

In den Ausführungsformen nach Figuren 3 und 6 ist der dort gezeigten Spannzange 3 eine Überwurfmutter 13 zugeordnet. Die Überwurfmutter 13 ist über entsprechende Spannstrukturen 14 ebenfalls mittels eines Spannwerkzeugs betätigbar. Hierbei ist an der Überwurfmutter 13 das Spannzangengewinde 10 in Form eines Innengewindes ausgebildet, das mit einem Gewinde 11 des zweiten Endes 8 des Futterkörpers 4 verschraubt ist. Auch hier wird der Kegel 23 der Spannzange 3 durch die konusförmige Zangenaufnahme 9 gepresst und ein Niederzug für die Spannzange 3 ist bereitgestellt.

In allen gezeigten Ausführungsbeispielen sind in dem Anschlussstück 6 über dem Umfang verteilte Sperrglieder 16 angeordnet. Vorliegend sind die Sperrglieder 16 als Sperrkugeln geformt, die in entsprechende Strukturen in einer Maschinenspindel 7 eingreifen können. In den Ausführungsbeispielen nach Figuren 1 und 3 sind insgesamt genau drei, im Ausführungsbeispiel nach Figur 6 insgesamt genau sechs der Sperrglieder 16 vorgesehen, wobei auch hier mehr oder weniger Sperrglieder 16, beispielsweise zwei oder acht Sperrkugeln, Einsatz finden können. Ebenso ist es gemäß einer alternativen Ausführungsform vorgesehen, dass die Sperrglieder 16 als Sperrriegel geformt sind, die in entsprechende Riegelaufnahmen an der Maschinenspindel 7 eingreifen können.

Am ersten Ende 5 des Futterkörpers 4 ist ein, vorzugsweise manuell betätigbarer, Sperrring 17 angeordnet, durch den die Sperrglieder 16 zwischen einer eingerückten, die Maschinenspindel 7 sperrenden Position und einer ausgerückten, die Maschinenspindel 7 freigegebenen Position verstellbar sind. Wie aus den Figuren 1, 3 und 6 ferner ersichtlich wird, ist der Sperrring 17 vorzugsweise mehrteilig aus einer Sperrhülse 27 und einer Betätigungshülse 28 geformt. In der entriegelten, die Maschinenspindel 7 freigebenden Position sind die Sperrglieder 16 in entsprechenden Ausnehmungen 25 der Sperrhülse 27 aufgenommen. Wird der Sperrring 17 axial nach hinten, das heißt in Richtung der Maschinenspindel 7 verstellt, so gleiten die Sperrglieder 16 aus den Ausnehmungen 25 heraus und an der Sperrhülse 27 ausgebildete, vorzugsweise federnd gestaltete, Druckelemente 26 drücken die Sperrglieder 16 in die eingerückte, die Maschinenspindel 7 sperrende Position. Um den Sperrring 17 und damit die Sperrglieder 16 in einer die Maschinenspindel 7 sperrenden Position zu halten, ist ein Federelement 30 vorgesehen, das einenends an einer Schulter 31 des Futterkörpers 4 und anderenends an einer Schulter 32 des Sperringes 17 abgestützt ist. Das als Spiralfeder gebildete Federelement 30 drückt den Sperrring 17 also stets axial nach hinten, um ihn in die verriegelte Position zu bewegen. Axial rückwärtig, d.h. auf der der Maschinenspindel 7 zugewandten Seite des Anschlussstücks 6 ist ferner ein Anschlagring 33 angeordnet, der den Sperrring 17 nach hinten abstützt und ihn dadurch am einteilig geformten Futterkörper 4 sichert.

In den Anschlussstücken 6 der Ausführungsformen gemäß Figuren 1 und 3 ist ein Mitnahmestift 15 drehfest im Futterkörper 4 angeordnet. Dieser Mitnahmestift 15 kann in eine Stiftaufnahme 20 einer Maschinenspindel 7, vorzugsweise spielfrei eintauchen (Fig. 5). Dadurch ist gewährleistet, dass die Drehbewegung der Maschinenspindel 7 unmittelbar über den Mitnahmestift 15, vorzugsweise spielfrei, auf den einteilig geformten Futterkörper 4 übertragen wird. Alternativ ist auch vorgesehen, dass das Anschlussstück 6 selbst mit einem unrunden Querschnitt gestaltet ist, in den eine Maschinenspindel 7 entsprechenden Querschnitts eingreifen kann zur Ausbildung einer positiven Mitnahme.

Des Weiteren weist die Maschinenspindel 7 gemäß Figur 5 eine als eine Ringnut geformte Sperrgliedaufnahme 18 auf, die eine Steuerkurve 19 umfasst. Die Steuerkurve ist an der dem Präzisionsspannsystem 1 zugewandten Nutwange dieser Ringnut ausgeformt. Diese Steuerkurve 19 ist dabei derart ausgestaltet, dass sie einen Niederzug für den Futterkörper 4 bereitstellt, wodurch das Präzisionsspannsystem 1 - noch - drehfester an die Maschinenspindel 7 koppelbar ausgeführt ist.

Das Anschlussstück 6 der Ausführungsform gemäß Figur 6 weist demgegenüber keinen Mitnahmestift 15 im Futterkörper 4 auf. Allerdings ist hierbei ein Satz an Sperrgliedaufnahmen 18 an der Maschinenspindel 7 mit einer kalottenförmigen Ausgestaltung vorgesehen. In der verriegelten Position sind in diesen kalottenförmig gestalteten Sperrgliedaufnahmen 18 die als Sperrkugeln gebildeten Sperrglieder 16 formschlüssig aufgenommen, wodurch eine formschlüssige Verbindung zwischen der Maschinenspindel 7 und dem Futterkörper 4 entsteht. Somit ist mittels der Sperrkugeln und der Kalottenaufnahmen eine positive Drehmitnahme zwischen der Maschinenspindel 7 und dem Futterkörper 4 auch ohne einen Mitnahmestift 15 ermöglicht. Anstelle einer Kalottenform kann auch eine Riegelaufnahme vorgesehen sein, in die ein als Sperrriegel gebildetes Sperrglied 16 eintreten kann.

In allen gezeigten bzw. beschriebenden Ausführungsformen ist im Ergebnis also ein Präzisionsspannsystem 1 geschaffen, das mit einer nur sehr geringen Anzahl an Schnittstellen geformt ist. Es überträgt die Drehbewegung der Maschinenspindel 7 nahezu schnittstellenfrei auf das Bohrwerkzeug, wodurch Rundlauffehler von 0,07 mm oder weniger erzielt werden. Die axiale Länge des Präzisionsspannsystems 1 beträgt dabei vorzugsweise zwischen 40 mm und 50 mm, so dass das Präzisionsspannsystem 1 sehr kompakt geformt ist.

Die Spannzangen 3 können zusätzlich austauschbar in der Zangenaufnahme 9 aufgenommen sein, so dass auch Spannzangen 3 mit Werkzeugaufnahmen 2 unterschiedlichen Durchmessers in ein- und denselben Futterkörper 4 einsetzbar sind.

### Bezugszeichenliste

- 1: Präzisionssystem
- 2: Werkzeugaufnahme
- 3: Spannzange
- 4: Futterkörper
- 5: erstes Ende
- 6: Anschlussstück
- 7: Maschinenspindel
- 8: zweites Ende
- 9: Zangenaufnahme
- 10: Spannzangengewinde
- 11: Gewinde
- 12: Spannbund
- 13: Überwurfmutter
- 14: Spannstrukturen
- 15: Mitnahmestift
- 16: Sperrglieder
- 17: Sperrring
- 18: Sperrgliedaufnahmen
- 19: Steuerkurve
- 20: Stiftaufnahme
- 21: Anschlag (hinten)
- 22: Anschlag (vorne)
- 23: Kegel
- 24: Tasche
- 25: Ausnehmungen
- 26: Druckelement
- 27: Sperrhülse
- 28: Betätigungshülse
- 29: Längsachse
- 30: Federelement
- 31: Schulter des Futterkörpers
- 32: Schulter des Sperrrings
- 33: Anschlagring
- 34: Schlitze

## Patentansprüche

1. Präzisionsspannsystem (1) mit einer eine Werkzeugaufnahme (2) aufweisenden Spannzange (3) und mit einem einteilig gebildeten Futterkörper (4), an dessen erstes Ende (5) ein Anschlussstücks (6) ausgeformt ist, welches unmittelbar an eine Maschinenspindel (7) einer Bohrmaschine anschließbar ist, und an dessen dem ersten Ende (5) abgewandtes zweites Ende (8) eine Zangenaufnahme (9) zur Aufnahme der Spannzange (3) ausgeformt ist, **dadurch gekennzeichnet, dass** das Anschlussstück (6) derart ausgestaltet ist, eine formschlüssige Verbindung mit der Maschinenspindel (7) auszubilden zur positiven Drehmitnahme des Futterkörpers (4), dass die Zangenaufnahme (9) konusförmig gebildet ist, und dass der Spannzange (3) ein Spannzangengewinde (10) zugeordnet ist, welches mit einem am zweiten Ende (8) des Futterkörpers (4) ausgebildeten Gewinde (11) verschraubbar ist.

2. Präzisionsspannsystem (1) nach Anspruch 1, **dadurch gekennzeichnet, dass** das Gewinde (11) radial innenliegend an der Zangenaufnahme (9) ausgebildet ist, und dass das Spannzangengewinde (10) am Außenumfang der Spannzange (3) ausgebildet ist.

3. Präzisionsspannsystem (1) nach Anspruch 2, **dadurch gekennzeichnet, dass** an der Spannzange (3) ein Spannbund (12) ausgebildet ist zur Aufnahme eines Spannwerkzeugs.

4. Präzisionsspannsystem (1) nach Anspruch 1, **dadurch gekennzeichnet, dass** das Gewinde (11) radial außenliegend an der Zangenaufnahme (9) ausgebildet ist, und dass das radial innenliegende Spannzangengewinde (10) an einer der Spannzange (3) zugeordneten Überwurfmutter (13) ausgebildet ist.

5. Präzisionsspannsystem (1) nach Anspruch 4, **dadurch gekennzeichnet, dass** an der Überwurfmutter (13) Spannstrukturen (14) ausgebildet sind zur Aufnahme eines Spannwerkzeugs.

6. Präzisionsspannsystem (1) nach einem der Ansprüche 1 bis 5, **dadurch gekennzeichnet, dass** im Anschlussstück (6) ein Mitnahmestift (15) unrunden Querschnitts vorgesehen ist.

7. Präzisionsspannsystem (1) nach einem der Ansprüche 1 bis 6, **dadurch gekennzeichnet, dass** in dem Anschlussstück (6) über den Umfang verteilte Sperrglieder (16) angeordnet sind.

8. Präzisionsspannsystem (1) nach Anspruch 7, **dadurch gekennzeichnet, dass** am ersten Ende (5) des Futterkörpers (4) ein betätigbarer Sperrring (17) angeordnet ist, durch den die Sperrglieder (16) zwischen einer eingerückten, die Maschinenspindel (7) sperrenden Position und einer ausgerückten, die Maschinenspindel (7) freigebenden Position verstellbar sind.

9. Kombination einer eine Maschinenspindel (7) aufweisenden Bohrmaschine und einem Präzisionsspannsystem (1) nach einem der Ansprüche 1 bis 8.

10. Kombination nach Anspruch 9, **dadurch gekennzeichnet, dass** in dem Anschlussstück (6) des Futterkörpers (4) über den Umfang verteilte Sperrglieder (16) angeordnet sind, dass am ersten Ende (5) des Futterkörpers (4) ein betätigbarer Sperrring (17) angeordnet ist, durch den die Sperrglieder (16) zwischen einer eingerückten, die Maschinenspindel (7) sperrenden Position und einer ausgerückten, die Maschinenspindel (7) freigebenden Position verstellbar sind, und dass die Maschinenspindel (7) mindestens eine Sperrgliedaufnahme (18) aufweist zur Aufnahme mindestens eines der im Anschlussstück (6) angeordneten Sperrglieder (16).

11. Kombination nach Anspruch 9, **dadurch gekennzeichnet, dass** in dem Anschlussstück (6) des Futterkörpers (4) sowohl ein Mitnahmestift (15) unrunden Querschnitts vorgesehen ist als auch über den Umfang verteilte Sperrglieder (16) angeordnet sind, dass am ersten Ende (5) des Futterkörpers (4) ein betätigbarer Sperrring (17) angeordnet ist, durch den die Sperrglieder (16) zwischen einer eingerückten, die Maschinenspindel (7) sperrenden Position und einer ausgerückten, die Maschinenspindel (7) freigebenden Position verstellbar sind, und dass die Maschinenspindel (7) sowohl mindestens eine eine Steuerkurve (19) aufweisende Sperrgliedaufnahme (18) als auch eine stirnseitig angeordnete Stiftaufnahme (20) unrunden Querschnitts umfasst.

12. System umfassend ein Präzisionsspannsystem (1) nach einem der Ansprüche 1 bis 8, **gekennzeichnet durch** einen Satz an austauschbar in der Zangenaufnahme (9) anordenbaren Spannzangen (3), welche Werkzeugaufnahmen (2) unterschiedlichen Durchmessers aufweisen.
